# EUROPÄISCHE PATENTSCHRIFT

(11) **EP 2 199 737 B1**
(45) Veröffentlichungstag und Bekanntmachung des Hinweises auf die Patenterteilung: **31.08.2011**
(21) Anmeldenummer: 08106013.9
(22) Anmeldetag: 18.12.2008
(51) Int. Cl.: G01C 11/06, F16P 3/14, G01B 11/25, G05B 19/4061

(54) **Beleuchtungseinheit für 3D-Kamera**
3d camera illumination unit
Unité d'éclairage pour caméra 3d

(43) Veröffentlichungstag der Anmeldung: 23.06.2010
(73) Patentinhaber: SICK AG, 79183 Waldkirch (DE)
(72) Erfinder: Ringwald, Siegfried, 79215 Elzach (DE)
(74) Vertreter: Hehl, Ulrich

(56) Entgegenhaltungen:
- DE-B3-102006 001 634
- DE-B3-102007 036 129

## Beschreibung

Die Erfindung betrifft eine Beleuchtungseinheit und ein Verfahren zur Beleuchtung eines Überwachungsbereichs eines kamerabasierten Sensors nach dem Oberbegriff von Anspruch 1 beziehungsweise 11.

Kamerabasierte Sensoren werden für eine Vielzahl von Überwachungs- und Automatisierungsaufgaben eingesetzt. Dabei wird die Auswertung erschwert, wenn die aufgenommene Szenerie kontrastschwach ist, da Strukturelemente dann nur schwer oder gar nicht erkannt werden können. Dies kann bereits bei zweidimensionalen Kamerasystemen problematisch werden.

Es besteht aber für viele Anwendungen sogar der Wunsch, dreidimensionale Bilddaten auszuwerten. In dynamischen Aufbauten kann dies durch Bewegung des Messobjekts, etwa im Materialfluss, beziehungsweise durch Bewegen oder Verschwenken einer zweidimensionalen scannenden oder 2D-kamerabasierten Sensoreinheit erreicht werden. Dies ist wegen der erforderlichen Bewegung keine vollwertige dreidimensionale Messtechnik.

Eine echte 3D-Kamera zeichnet eine Entfernungskarte unabhängig von der Dynamik im Überwachungsbereich oder einer Eigenbewegung auf, bezieht also Abstandswerte der Tiefendimension in die aufgenommenen Bilddaten ein. Ein bekanntes Verfahren für die Gewinnung der Abstandsinformationen ist die Stereoskopie. Dabei wird mit mindestens zwei Kameras eine Szenerie aus versetzter Perspektive aufgenommen, und in den Einzelbildern werden korrespondierende Elemente identifiziert, aus deren Disparität die zugehörige Entfernung trianguliert werden kann.

Stereoskopische 3D-Messung arbeitet somit auf Basis von kontrastbehafteten Bildinhalten, weil nur ein kontrastierter Bereich eine Zuordnung von Elementen erlaubt. Auf homogenen, kontur- und kontrastlosen Flächen können Korrespondenzen nicht eindeutig bestimmt werden, so dass in diesen Bereichen keine Tiefeninformation berechenbar ist und Lücken in der Entfernungs- oder Tiefenkarte entstehen. Eine dichte oder füllige Tiefenkarte, bei der jeder Bildpunkt mit einer zutreffenden Abstandsinformation belegt ist, ermöglichen deshalb nur vollständig strukturierte Bilder.

Besonders bei Anwendungen in der Sicherheitstechnik sind Lücken in den Tiefenkarten nicht hinnehmbar. Hier ist die Überwachungsaufgabe, jeden unzulässigen Eingriff von Personen in die Nähe eines Gefahrenbereichs zu erkennen und die Gefahr dann rechtzeitig zu beseitigen. Ein typisches Beispiel sind Absicherungen von Maschinen oder Robotern, in deren Nähe zumindest in gewissen Arbeitsschritten niemand kommen darf, um Unfälle und Verletzungen zu vermeiden. Die 3D-Sicherheitskamera erkennt solche Situationen und schaltet die Maschine rechtzeitig ab oder verbringt sie in eine sichere Position. Mit Hilfe der Tiefeninformationen können Schutzbereiche variabler und genauer festgelegt und mehr und genauere Klassen von erlaubten Objektbewegungen unterschieden werden, also beispielsweise Bewegungen des Roboters selbst oder Vorbeibewegungen eines Körperteils an der gefährlichen Maschine in einer unterschiedlichen Tiefenebene, die an sich völlig ungefährlich ist, aber von einer zweidimensionalen Kamera nicht differenziert werden kann.

Jegliche Lücken oder Fehler in der Tiefenkarte, also Bereiche, in denen die Korrespondenz nicht oder falsch festgestellt wird und für die entsprechend kein oder ein falscher Abstandswert vorliegt, gefährden dann die Gesundheit von Bedienpersonal oder führen zumindest zu an sich unnötigen Abschaltungen und damit Ausfallzeiten. Dabei sollen im Idealfall bereits Eingriffe durch Fremdobjekte von der Größe eines Fingers sicher erkannt werden.

Passive Stereomesssysteme, die ihre Abstandsmessung allein aufgrund der natürlicherweise in den Bildern vorhandenen Merkmale durchführen und demnach keinen Einfluss auf die Qualität und Dichte dieser Merkmale haben, lassen daher keine zuverlässige Sicherheitsfunktion zu. Zu einer möglichen Struktur- oder Kontrastschwäche tritt hier schlicht mangelnde Helligkeit als mögliche Fehlerquelle hinzu. Selbstverständlich ist für eine vorgegebene Anwendung möglich, die Szenerie entsprechend auszuwählen oder zu präparieren, aber dies ist umständlich und schafft zusätzliche Abhängigkeiten. Eine derartige passive Lösung ist beispielsweise in der EP 1 543 270 B1 offenbart.

Um die gewünschten dichten Tiefenkarten zu erhalten, kann der Szenerie die notwendige Beleuchtungsstruktur aufgeprägt werden, indem eine aktive Beleuchtungseinheit ein Muster aus hellen und dunklen Bereichen und damit Kontrast auch in an sich struktur- und kontrastlosen Bereichen erzeugt.

In der US 2007-0263903 A1 erzeugt eine aktive Beleuchtungseinheit ein Beleuchtungsmuster mittels eines diffraktiven optischen Elements (DOE). Dabei wird aber ein Teil in der Größenordnung um 1% des einfallenden Laserlichts ungebeugt in nullter Ordnung transmittiert. Es verlässt also ein immer noch sehr starker gebündelter Strahl die Beleuchtungseinheit, und es sind keine Lösungen bekannt, diesen Strahl ohne Weiteres wieder aus dem Beleuchtungsfeld zu entfernen. Somit sind derartige Beleuchtungseinheiten entweder nicht in der Lage, Anforderungen an die Augensicherheit beziehungsweise die Laserschutzklasse zu erfüllen, und damit für den Betrieb unzulässig, oder man muss mit sehr wenig Nutzlicht auskommen, damit der ungebeugt transmittierte Strahl für die Augensicherheit unkritisch bleibt. Derart wenig Nutzlicht erlaubt aber keine Erzeugung dichter Tiefenkarten mit Stereoskopiealgorithmen über mehr als kürzeste Reichweiten.

Die DE 10 2006 001 634 B3 schlägt eine Reihe von Lösungen vor, um die von einem Stereoskopiesystem aufgenommene Szenerie mit einem Zufalls- oder Pseudozufallsmuster auszuleuchten. Dazu werden Masken verwendet, beispielsweise ein veränderliches LCD, um transmittiertem Licht ein Muster aufzuprägen. Statt einer Maske können zwei Gitter vorgesehen sein, die gegeneinander verschoben werden und so uriterschiedliche Moire-Effekte erzeugen. Schließlich wird in einer Ausführungsform Licht linienförmig mit einer Zylinderlinse aufgeweitet und die entstehende Lichtlinie über ein Dreh-Polygon auf die Szenerie projiziert. Durch zufällige Intensitätsmodulation entsteht dann in Drehrichtung ein Muster. In Richtung der Lichtlinie selbst entsteht so aber keine Struktur. Außerdem ist ungünstig, wenn die Mustererzeugung auf zufällige Intensitätsmodulation angewiesen ist. Die Intensitätsmodulation ist dann nicht mehr als Freiheitsgrad für die Beleuchtung verfügbar, und die maximale Lichtleistung wird durch die Modulation im Endeffekt auf einen dem Erwartungswert des Zufallsgenerators entsprechenden Wert begrenzt, anders als etwa bei einem DOE oder dergleichen, wo die maximale Lichtleistung nur musterförmig umverteilt wird und damit insgesamt die volle Lichtleistung dem Stereoskopieverfahren zugute kommt.

Es ist daher Aufgabe der Erfindung, eine lichtstarke Beleuchtungseinheit für einen kamerabasierten Sensor mit gutem Kontrast und hohen Transmissioneigenschaften, also geringen optischen Verlusten anzugeben.

Diese Aufgabe wird durch eine Beleuchtungseinheit gemäß Anspruch 1 und ein Verfahren zur Beleuchtung eines Überwachungsbereichs eines kamerabasierten Sensors gemäß Anspruch 11 gelöst.

Die erfindungsgemäße Lösung geht von dem Prinzip aus, das Muster zweistufig zu erzeugen, in dem in einem ersten Schritt Struktur in einer ersten Richtung und in einem zweiten Schritt Struktur in einer zweiten Richtung quer zu der ersten Richtung entsteht. Dabei bedeutet quer zunächst nur Einschluss eines beliebigen Winkels ungleich Null. Bevorzugt ist, wenn in dem entstehenden zweidimensionalen Muster die beiden Richtungen senkrecht zueinander stehen. Das wiederum hängt von den Flächen der Szenerie und der Orientierung der Kamera gegenüber diesen Flächen ab. Gewöhnlich wird der geeignete Bezugspunkt eine Ebene senkrecht zur optischen Achse sein. Dabei variiert natürlich der Ablenkungswinkel mit der Periode, die senkrechte Lage bezieht sich beispielsweise auf einen ausgezeichneten Ablenkungswinkel oder das Mittel einer Periode der Ablenkung.

Soweit nach dem ersten Schritt noch aus Sicht des Augenschutzes bedenkliche Intensitätsmaxima vorhanden sind, werden diese im zweiten Schritt verschmiert und damit entschärft. Mit der erfindungsgemäßen Lösung wird der Überwachungsbereich oder ein interessierender Teilbereich (ROI, region of interest) systemangepasst und flächig mit einem definierten Muster ausgeleuchtet. Die Beleuchtungseinheit kann modular aufgebaut sein und hat eine sehr hohe Beleuchtungseffizienz mit nur geringer optischer Verlustleistung. Alle beteiligten Komponenten haben nur geringe optische Verluste. Die energetische Intensitätsverteilung in der ersten Richtung ist frei wählbar und gibt damit große Freiheiten in Bezug auf das entstehende Beleuchtungsmuster. Ein Projektionsobjektiv ist nicht erforderlich.

Das optische Element ist bevorzugt ein diffraktives optisches Element (DOE). Es weist also eine Mikrostruktur auf, die so berechnet ist, dass bei Anstrahlen mit Laserlicht ein wohldefiniertes Muster im Beleuchtungsbereich entsteht. Damit wird durch Beugungseffekte die eingestrahlte Energie in der entstehenden Laserlinie, die sich in der ersten Richtung erstreckt, mit einer beliebigen gewünschten Struktur umverteilt. Das DOE kann auch in der zweiten Richtung ein Muster erzeugen, Beleuchtungsstruktur in dieser Richtung wird anschließend durch die periodische Ablenkung verschmiert und ist daher im Endeffekt nicht frei wählbar. Erfindungsgemäß wird ein Intensitätsmaximum in nullter Ordnung des DOE durch die periodische Ablenkung verteilt. Damit sind strenge Laserschutzklassen wie 1 oder 1 M realisierbar, auch wenn Laser hoher Leistung zumindest oberhalb einiger Watt eingesetzt werden. Es entsteht ein kontraststarkes Beleuchtungsfeld auch in größeren Reichweiten beispielsweise bis zu 5m und darüber hinaus.

Die Ablenkeinheit weist bevorzugt ein Spiegelrad, ein Polygonspiegelrad oder einen Drehspiegel auf, wobei insbesondere die Spiegelflächen der Ablenkeinheit als Hohlspiegel mit nochmals bevorzugt torischer Form ausgebildet sind. Derartige Ablenkeinheiten haben sich in Laserscannern oder Barcodescannern seit langem bewährt, und sie können für eine hinreichend schnelle periodische Ablenkung sorgen. Torische Spiegelflächen sind geeignet, um eine Kissenverzeichnung in der Projektionsebene zu minimieren oder ganz auszugleichen. Das Beleuchtungsmuster kann daher zuverlässig erzeugt und ausgewertet werden.

Bevorzugt ist eine Modulationseinheit für die Lichtquelle vorgesehen, so dass durch Intensitätsmodulation dem Beleuchtungsmuster Struktur in der zweiten Richtung vorgebbar ist. Zusätzlich zu einer Beleuchtungsstruktur in der ersten Richtung durch das optische Element wird also auch in der zweiten Dimension eine Helligkeitsänderung bewirkt. Dabei ist eine Möglichkeit, auf diese Weise das zunächst streifige Muster mit echt zweidimensionaler Struktur zu versehen.

Eine andere bevorzugte Möglichkeit ist, die Modulationseinheit dafür auszubilden, die Intensität zum Rande jeder Periode hin anzuheben und somit eine U-förmige Intensitätsverteilung in der zweiten Richtung vorzugeben. So entsteht also zunächst kein eigentliches Beleuchtungsmuster in der zweiten Richtung, obwohl denkbar wäre, die U-förmige Intensitätsverteilung zugleich mit einer mustererzeugenden Modulation zu überlagern. Stattdessen wird ein Störeffekt ausgeglichen: Zum Rand jeder Periode hin ist die effektive Ablenkgeschwindigkeit wegen des veränderten Auftreffwinkels höher als in der Mitte. Damit würde ohne Kompensation an den Rändern in der zweiten Richtung die Beleuchtungsstärke abnehmen. Um diesen unerwünschten Effekt zu kompensieren, wird mit einer zu dem Effekt inversen Intensitätsmodulation gearbeitet. Durch diese Maßnahme kann durch weitere Anhebung der Intensität zu den Rändern hin zugleich ein cos³-Fehler der Kameraobjektive kompensiert werden, der sonst zu einem Helligkeitsabfall an den Bildrändern der Bildsensoren führen würde. Durch gezielte und einfache Energieumverteilung kann so der Bildrandhelligkeitsabfall unterdrückt und eine gleichmäßige Ausleuchtung erreicht werden.

Die erfindungsgemäßen Beleuchtungseinheiten können vorteilhafterweise modular kombiniert werden. In einer bevorzugten Anordnung von mindestens einer ersten Beleuchtungseinheit und einer zweiten Beleuchtungseinheit werden diese so zueinander angeordnet, dass sich die Beleuchtungsmuster in dem Überwachungsbereich überlagern, wobei insbesondere die erste Richtung der ersten Beleuchtungseinheit der zweiten Richtung der zweiten Beleuchtungseinheit und umgekehrt die zweite Richtung der ersten Beleuchtungseinheit der ersten Richtung der zweiten Beleuchtungseinheit entspricht. Diese Überlagerung ist noch bevorzugter vollständig, d.h. beide Beleuchtungseinheiten leuchten denselben Bereich aus. Jede Beleuchtungseinheit sorgt in der zugehörigen Aufweitungsrichtung des optischen Elements für Beleuchtungsstruktur. Im Endeffekt ergibt sich daraus ein in beiden Dimensionen frei strukturierbares Beleuchtungsmuster.

In der Anordnung ist bevorzugt eine Synchronisierungseinheit vorgesehen, welche die Bewegung der Ablenkeinheit der ersten Beleuchtungseinheit mit der Bewegung der Ablenkeinheit der zweiten Beleuchtungseinheit synchron zur Erzeugung eines stehenden Beleuchtungsmusters synchronisieren kann. Durch die Synchronisation überlagern sich stets Lichtlinien zu gleichen Ablenkungswinkeln. In jeder Periode wird also dieselbe Intensitätsstruktur erzeugt, und das Beleuchtungsmuster ist statisch.

Alternativ weisen die Ablenkeinheiten der ersten Beleuchtungseinheit und der zweiten Beleuchtungseinheit einen zueinander asynchron einstellbaren Antrieb zur Erzeugung eines laufenden Beleuchtungsmusters auf. Damit können die Abtastungen in der ersten Richtung von der zweiten Richtung entkoppelt projiziert werden, so dass die überlagerte Intensitätsverteilung sich ständig ändert. Dabei kann Synchronizität alternativ zu einer Synchronisierungseinheit zumindest näherungsweise auch erreicht werden, indem die beiden Beleuchtungseinheiten ohne Kommunikation eine gleiche Ablenkungsgeschwindigkeit wählen. Umgekehrt kann auch die Synchronisierungseinheit gezielt asynchrone Ablenkungen erzeugen. Das Synchronizitätsverhalten kann von Anwendung zu Anwendung, aber auch dynamisch innerhalb einer Anwendung varriert werden.

In Weiterbildung der Erfindung ist eine Kamera, insbesondere 3D-Stereokamera mit mindestens einer erfindungsgemäßen Beleuchtungseinheit oder mindestens einer Anordnung von Beleuchtungseinheiten vorgesehen, die eine Auswertungseinheit aufweist, welche für die Anwendung eines Stereoalgorithmus ausgebildet ist, in dem einander zugehörige Teilbereiche der von mindestens zwei Kameras der Stereokamera aufgenommenen Bilder erkannt werden und deren Abstand anhand der Disparität berechnet wird. Diese Kamera profitiert von der erfindungsgemäß lichtstark und kontrastreich beleuchteten Szenerie und arbeitet daher mit besonders hoher Genauigkeit und Zuverlässigkeit.

Die Kamera ist bevorzugt als Sicherheitskamera ausgebildet, wobei die Auswertungseinheit weiterhin dafür ausgebildet ist, eine dichte Tiefenkarte zu erzeugen, unzulässige Eingriffe in den Überwachungsbereich zu erkennen und daraufhin ein Abschaltsignal zu erzeugen, wobei ein Sicherheitsausgang vorgesehen ist, über welchen die Sicherheitskamera ein Abschaltsignal an eine überwachte Maschine ausgeben kann. Die dichte Tiefenkarte erlaubt eine zuverlässige sicherheitstechnische dreidimensionale Überwachung unabhängig von Szenerie und Umgebungslicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden abhängigen Ansprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Ausführungsform einer erfindungsgemäßen Beleuchtungseinheit, die einen Raumbereich mit einem strukturierten Muster beleuchtet, in einer 3D-Sicherheitskamera;
- Fig. 2: eine schematische Darstellung einer Ausführungsform einer einzelnen er- findungsgemäßen Beleuchtungseinheit mit einer periodischen Ablenkein- heit;
- Fig.3: eine Darstellung einer Intensitätsmodulation in einer weiteren Ausfüh- rungsform der erfindungsgemäßen Beleuchtungseinheit zur Verhinderung von Bildrandhelligkeitsabfall; und
- Fig. 4: eine schematische Darstellung einer Anordnung von zwei erfindungsge- mäßen Beleuchtungseinheiten mit überlagertem Beleuchtungsfeld.

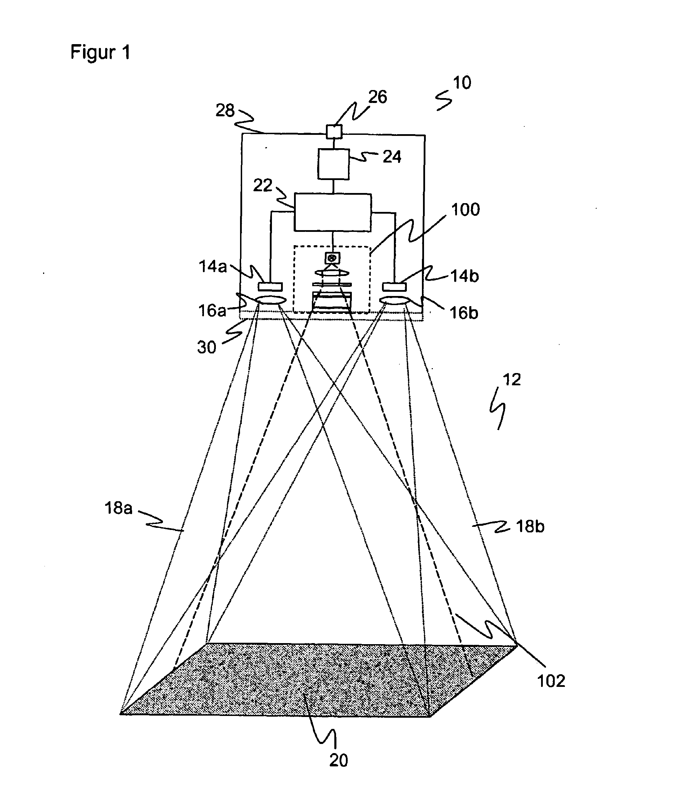

Figur 1 zeigt in einer schematischen dreidimensionalen Darstellung den allgemeinen Aufbau einer erfindungsgemäßen 3D-Kamera 10 nach dem Stereoskopieprinzip, die beispielsweise zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welche als Linsen 16a, 16b dargestellt sind und in der Praxis als jede bekannte Abbildungsoptik realisiert sein können. Der Sichtwinkel dieser Optiken ist in Figur 1 durch gestrichelte Linien dargestellt, die jeweils eine Sichtpyramide 18a, 18b bilden.

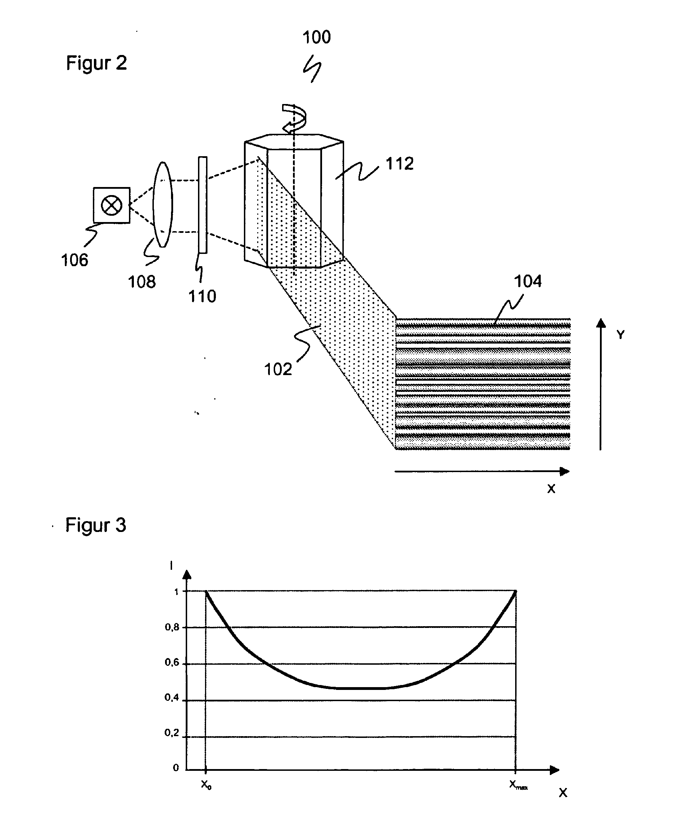

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit 100 ebenso asymmetrisch oder sogar außerhalb der Sicherheitskamera 3D angeordnet sein kann. Die erfindungsgemäße Beleuchtungseinheit 100 erzeugt in einem Beleuchtungsbereich 102 ein strukturiertes Beleuchtungsmuster 20 in dem Raumbereich 12 und wird weiter unten in verschiedenen Ausführungsformen im Zusammenhang mit den Figuren 2 bis 4 näher erläutert.

Mit den beiden Bildsensoren 14a, 14b und der Beleuchtungseinheit 100 ist eine Steuerung 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Raumbereichs 12. Das strukturierte Beleuchtungsmuster 20 sorgt dabei für einen guten Kontrast und eine eindeutig zuordenbare Struktur jedes Bildelements in dem beleuchteten Raumbereich 12. Es ist bevorzugt selbstunähnlich zumindest in Richtung der Epipolarlinie, wobei der wichtigste Aspekt der Selbstunähnlichkeit das zumindest lokale, besser globale Fehlen von Translationssymmetrien ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Mit zwei Bildsensoren 14a, 14b tritt dabei ein bekanntes Problem auf, dass Strukturen längs der Epipolarlinie nicht für die Disparitätsschätzung herangezogen werden können, weil hier kein Triangulationswinkel auftritt oder, anders ausgedrückt, das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule versetzt angeordnet sind.

Im von dem Sicherheitssensor 10 überwachten Raumbereich 12 können sich bekannte und unerwartete Objekte befinden. Dabei kann es sich beispielsweise um einen Roboterarm, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine in dem Raumbereich 12 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht. Die Steuerung 22 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 22 einen unzulässigen Eingriff in ein Schutzfeld, so wird über eine Warn- oder Abschalteinrichtung 24, die wiederum in die Steuerung 22 integriert sein kann, eine Warnung ausgegeben oder die Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sowie die Warn- oder Abschalteinrichtung 24 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

Die Sicherheitskamera 10 wird von einem Gehäuse 28 umgeben und geschützt. Durch eine Frontscheibe 30 kann Licht in und aus dem Raumbereich 12 hindurchtreten. Die Frontscheibe 30 hat Filtereigenschaften, welche auf die Sendefrequenz der Beleuchtungseinheit 100 abgestimmt ist.

Figur 2 zeigt eine erste Ausführungsform der erfindungsgemäßen Beleuchtungseinheit 100. Wie in der gesamten Beschreibung, bezeichnen gleiche Bezugszeichen die gleichen Merkmale. Die Perspektive der Darstellung ist vereinfacht, um das entstehende Beleuchtungsmuster 104 besser erkennbar zu machen, das aber im Grunde dem Beleuchtungsmuster 20 der Figur 1 entspricht.

Als Lichtquelle 106 dient eine Halbleiterdiode, beispielsweise eine LED, ein VCSEL (Vertical Cavity Surface Emitting Laser) oder eine Laserdiode. Soweit der Mustererzeugung ein Kohärenzeffekt zugrunde liegt, ist eine Laserlichtquelle erforderlich. Das ausgesandte Licht wird in einer Optik, etwa einer Sammellinse 108, auf unendlich fokussiert und auf ein mustererzeugendes optisches Element 110 gelenkt, welches das Licht in einer Richtung aufweitet. Somit entsteht mittels des optischen Elements 110 eine Lichtlinie mit einer Beleuchtungsstruktur in Aufweitungsrichtung, in der Darstellung die Höhenrichtung Y. Das mustererzeugende Element 110 kann das einfallende Licht zusätzlich auch in Querrichtung hierzu aufweiten und strukturieren, auch ein solches Lichtmuster wird im Folgenden vereinfachend als Lichtlinie bezeichnet.

Als mustererzeugendes optisches Element 110 kann ein DOE eingesetzt werden, dessen Mikrostruktur eine vordefinierte strukturierte Laserlinie erzeugt. Diese Laserlinie kann in ihrer lateralen Intensitätsverteilung, also in Y-Richtung, nahezu beliebige Muster annehmen, die von allgemeinen Inhomogenitäten bis zu einem definierten Punktoder Strichmuster mit unterschiedlichen Einzeldicken der Punkt- oder Strichelemente reicht. Durch Wahl des DOE sind nahezu beliebige Anforderungen an die Bestrahlungsstärkeverteilung erfüllbar. Statt eines DOE kann ein Dia, eine Maske eingesetzt werden. Dabei geht aber ein Teil des Lichts verloren, weil hierin Lichtenergie zur Strukturierung absorbiert wird und damit auch zu einer Erwärmung führt.

Die strukturierte Lichtlinie fällt auf eine periodische Ablenkeinheit 112, etwa ein rotierendes Polygonspiegelrad oder einen Drehspiegel, und wird in den Überwachungsbereich 12 projiziert. Die Lichtlinie wird deshalb in X-Richtung senkrecht zu der lateralen Y-Richtung periodisch abgelenkt und erzeugt so in der Projektionsebene das zweidimensionale Beleuchtungsmuster 104. Die Ablenk- oder Scanrichtung wird dabei bevorzugt quer zur Epipolarlinie der 3D-Kamera 10 gewählt, damit in Richtung der Epipolarlinie die Strukturierung durch das mustererzeugende optische Element 110 erhalten bleibt.

Das entstehende Muster ist zunächst ein Streifenmuster, ändert sich also in X-Richtung. Durch Intensitätsmodulation, also Modulation der Emissionsleistung der Lichtquelle 106 kann eine zusätzliche Helligkeitsveränderung in X-Richtung aufgeprägt werden. Solche Modulationen können beispielsweise die Steuerung 22 steuern. Somit lassen sich auch zweidimensional strukturierte Beleuchtungsmuster 104 erzeugen, die noch stärkere lokale Kontrastunterschiede bieten.

Intensitätsmodulationen können aber vor allem verwendet werden, um Inhomogenitäten der Beleuchtung und der Abbildung auszugleichen. Bedingt durch den optogeometrischen Aufbau nimmt die Bahngeschwindigkeit der projizierten Linien von der Bildmitte nach außen hin, oder anders ausgedrückt von der Mitte einer Spiegelfläche der Ablenkeinheit 12 zu deren Kanten hin deutlich zu. Dies verursacht eine entsprechende deutliche Reduktion der Bestrahlungsstärke zum Bildrand hin. Figur 3 veranschaulicht, wie die Intensität von Anfang x₀ zu Ende xₘₐₓ einer jeden Ablenkungsperiode variiert werden kann, um diesen Effekt zu kompensieren. Dabei steht eine Intensität I=1 für die maximal mögliche optische Ausgangsleistung der Lichtquelle 106, es ist also eine relative Intensität aufgetragen. Zur optimierten Kompensation des Randhelligkeitsabfalls wird die Lichtquelle entsprechend Figur 3 ortsabhängig moduliert und ihre Sendeleistung zu den Randbereichen der Projektionsebene mit dem Beleuchtungsmuster 104 kontinuierlich angehoben, um eine in ihrer effektiven Bestrahlungsstärke homogenere Beleuchtung zu gewährleisten.

Durch diese Maßnahme lässt sich auch ein cos³-Fehler der Objektive 16a, 16b der Bildsensoren 14a, 14b korrigieren. Das bekannte cos³-Gesetz beschreibt die systematische Bildhelligkeitsabnahme von der bildsensorseitigen Bildmitte zum Bildrand. Für eine Kompensation genügt es, die relative Leistung der Lichtquelle 106 zu den Bildrändern hin weiter zu erhöhen. Für betroffene Bildränder in Y-Richtung ist ein entsprechender Intensitätsausgleich am Rand durch Wahl des mustererzeugenden Elements 110 möglich.

Zur Verbesserung der Koppeleffizienz in der Projektionsebene können die Facetten oder Spiegelflächen der Ablenkeinheit 112 als Hohlspiegel ausgebildet werden. Diese Hohlspiegel besitzen vorzugsweise torische Form, bei der die Scanachse auch den Radius unendlich einnehmen kann. Diese Ausprägung reduziert deutlich die Kissenverzeichnung in der Projektionsebene des Beleuchtungsmusters 104.

Eine typische Scanfrequenz oder Bildwiederholrate liegt bei 1 KHz, die Modulation der Laseremissionsleistung typischerweise bei 500 KHz. Somit hat ein Polygonspiegelrad 12 eine Drehzahl von 125 Umdrehungen pro Sekunde und spannt einen Projektionswinkel von 90° auf. Mit einer solchen Anordnung lässt sich sehr leicht eine große Varianz an Hell-Dunkel-Verhältnissen einstellen. Die Kontraste werden schärfer und erhöhen die gesamte Leistungsfähigkeit der 3D-Kamera 10.

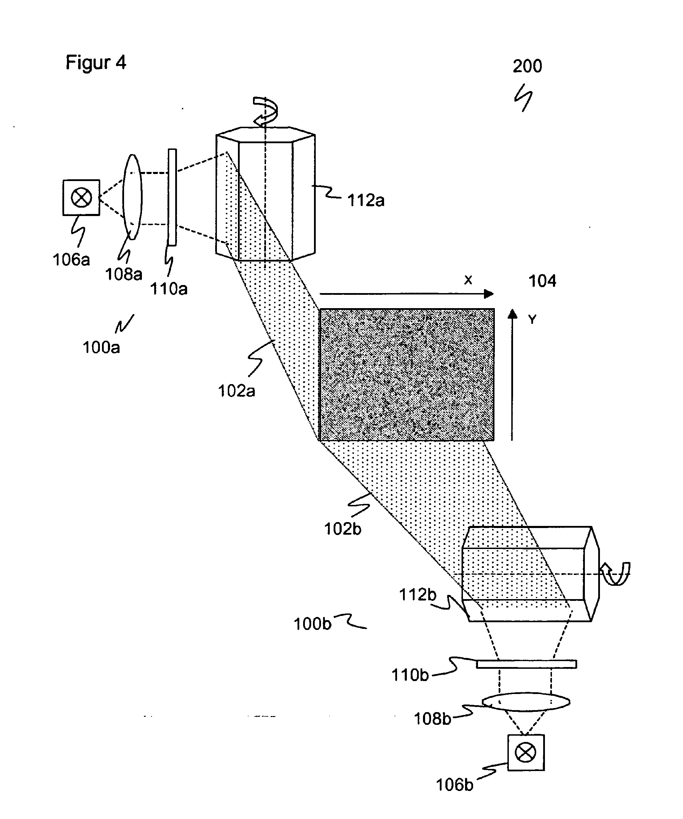

Figur 4 zeigt eine weitere Ausführungsform zur Erzeugung von Struktur in X-Richtung, also insgesamt eines zweidimensional strukturierten Beleuchtungsmusters 104 ohne Intensitätsmodulation. Eine zusätzliche Intensitätsmodulation kann dann allein für die im Zusammenhang mit Figur 3 beschriebene Kompensation genutzt werden und wird nicht mehr zur Mustererzeugung selbst benötigt. Grundsätzlich ist natürlich möglich, die notwendigen Intensitätsmodulationen für Mustererzeugung und Kompensation zu addieren, aber dabei geht im zeitlichen Mittel Lichtleistung gegenüber der maximal möglichen optischen Leistung verloren.

In dieser Ausführungsform sind mehrere, in diesem Fall zwei Beleuchtungseinheiten 100a, 100b modular zu einer Beleuchtungseinheit 200 zusammengesetzt. Jedes einzelne Modul 100a, 100b ist analog den zuvor beschriebenen Beleuchtungseinheiten 100 aufgebaut. Die Beleuchtungsmuster der beiden Module 100a, 100b überlagern sich dabei zu dem zweidimensional strukturierten Muster 104. Dafür sind die Module 100a, 100b quer zueinander angeordnet, so dass also die strukturierte Lichtlinie des ersten Moduls 100a quer zu der strukturierten Lichtlinie des zweiten Moduls 100b steht.

Sind die beiden Ablenkeinheiten 112a, 112b in ihrer Bewegung synchronisiert, so entsteht ein stehendes Bild in der Projektionsebene mit einer im Bezug auf die Beleuchtungsstärke hohen Ortsfrequenz in X- und Y-Achse. Diese lässt sich prinzipiell durch Modulation der Lichtquellen 106a, 106b noch weiter steigern.

Laufen die Ablenkeinheiten 112a, 112b dagegen asynchron zueinander, so wird die Helligkeitsverteilung ständig variiert, wobei die Frequenz dieser Variationen vom Grad der Asynchronizität abhängt.

Die erfindungsgemäße strukturierte Beleuchtung dient nicht nur in Sicherheitskameras, sondern auch für allgemeine Übervvachungsaufgaben einschließlich zweidimensionaler Kameras zur Kontrasterhöhung. Besondere Vorzüge zeigt sie aber im Zusammenhang mit stereoskopischen räumlichen Bildaufnahmeverfahren. Die entstehenden dichten Tiefenkarten wiederum können in anderen Anwendungen wie der Automatisierungstechnik verwendet werden, besonders geeignet sind sie für die Sicherheitstechnik, wo zuverlässige Auswertungen Voraussetzung des praktischen Einsatzes sind.

## Patentansprüche

1. Beleuchtungseinheit (100) mit einer Lichtquelle (106) und einem der Lichtquelle (106) nachgeordneten optischen Element (110), um das Licht in zumindest einer Richtung (Y) aufzuweiten, sowie einer Ablenkeinheit (112), die so angeordnet ist, dass das aufgeweitete Licht in einer zweiten Richtung (X) quer zu der ersten Richtung (Y) periodisch ablenkbar ist, um so ein Beleuchtungsmuster (104) in einem Überwachungsbereich (12) eines kamerabasierten Sensors (10) zu erzeugen,
**dadurch gekennzeichnet,**
**dass** das optische Element (110) dafür ausgebildet ist, zumindest in der ersten Richtung (Y) eine Beleuchtungsstruktur zu erzeugen, so dass ein zweidimensionales Beleuchtungsmuster (104) in dem Überwachungsbereich (12) entstehen kann.

2. Beleuchtungseinheit (100) nach Anspruch 1,
wobei das optische Element (110) ein diffraktives optisches Element ist.

3. Beleuchtungseinheit (100) nach Anspruch 1 oder 2,
wobei die Ablenkeinheit (112) ein Spiegelrad, ein Polygonspiegelrad oder einen Drehspiegel aufweist, und wobei insbesondere die Spiegelflächen der Ablenkeinheit (112) als Hohspiegel mit bevorzugt torischer Form ausgebildet sind.

4. Beleuchtungseinheit (100) nach einem der vorhergehenden Ansprüche,
wobei eine Modulationseinheit (22) für die Lichtquelle (106) vorgesehen ist, so dass durch Intensitätsmodulation dem Beleuchtungsmuster (104) Struktur in der zweiten Richtung (X) vorgebbar ist.

5. Beleuchtungseinheit (100) nach Anspruch 4,
wobei die Modulationseinheit (22) dafür ausgebildet ist, die Intensität zum Rande jeder Periode hin anzuheben und somit eine U-förmige Intensitätsverteilung in der zweiten Richtung vorzugeben.

6. Anordnung (200) von mindestens einer ersten Beleuchtungseinheit (100a) und einer zweiten Beleuchtungseinheit (100b) nach einem der Ansprüche 1 bis 5, die so zueinander angeordnet sind, dass sich die Beleuchtungsmuster (104) in dem Überwachungsbereich (12) überlagern, wobei insbesondere die erste Richtung der ersten Beleuchtungseinheit (100a) der zweiten Richtung der zweiten Beleuchtungseinheit (100b) und umgekehrt die zweite Richtung der ersten Beleuchtungseinheit (100a) der ersten Richtung der zweiten Beleuchtungseinheit (100b) entspricht.

7. Anordnung (200) nach Anspruch 6,
wobei eine Synchronisierungseinheit (22) vorgesehen ist, welche die Bewegung der Ablenkeinheit (112a) der ersten Beleuchtungseinheit (100a) mit der Bewegung der Ablenkeinheit (112b) der zweiten Beleuchtungseinheit (100b) synchron zur Erzeugung eines stehenden Beleuchtungsmusters (104) synchronisieren kann.

8. Anordnung nach Anspruch 6 oder 7,
wobei die Ablenkeinheiten (112a, 112b) der ersten Beleuchtungseinheit (100a) und der zweiten Beleuchtungseinheit (100b) einen zueinander asynchron einstellbaren Antrieb zur Erzeugung eines laufenden Beleuchtungsmusters (104) aufweisen.

9. 3D-Kamera (10) mit mindestens einer Beleuchtungseinheit (100) nach einem der Ansprüche 1 bis 5 oder mit mindestens einer Anordnung (200) nach einem der Ansprüche 6 bis 8, insbesondere 3D-Stereokamera, die eine Auswertungseinheit (22) aufweist, welche für die Anwendung eines Stereoalgorithmus ausgebildet ist, in dem einander zugehörige Teilbereiche der von mindestens zwei Kameras (14a, 14b, 16a, 16b) der Stereokamera (10) aufgenommenen Bilder erkannt werden und deren Abstand anhand der Disparität berechnet wird.

10. 3D-Kamera (10) nach Anspruch 9, die als Sicherheitskamera ausgebildet ist, wobei die Auswertungseinheit (22) weiterhin dafür ausgebildet ist, eine dichte Tiefenkarte zu erzeugen, unzulässige Eingriffe in den Überwachungsbereich (12) zu erkennen und daraufhin ein Abschaltsignal zu erzeugen, wobei ein Sicherheitsausgang (26) vorgesehen ist, über welchen die Sicherheitskamera (10) ein Abschaltsignal an eine überwachte Maschine ausgeben kann.

11. Verfahren zur Beleuchtung eines Überwachungsbereichs (12) eines kamerabasierten Sensors (10) mit einer Beleuchtungseinheit (100), die Licht einer Lichtquelle (106) in zumindest einer ersten Richtung (Y) aufweitet und das aufgeweitete Licht in einer zweiten Richtung (X) quer zu der ersten Richtung (Y) periodisch abgelenkt, um so ein Beleuchtungsmuster (104) in dem Überwachungsbereich (12) zu erzeugen,
**dadurch gekennzeichnet,**
**dass** bei der Aufweitung des Lichts insbesondere mittels eines diffraktiven optischen Elements (110) eine Beleuchtungsstruktur zumindest in der ersten Richtung (Y) erzeugt wird, so dass das in dem Überwachungsbereich (12) entstehende zweidimensionale Beleuchtungsmuster (104) zumindest in der ersten Richtung (Y) eine Musterstruktur hat.

12. Verfahren nach Anspruch 11,
wobei das Licht abhängig von der jeweiligen Ablenkung intensitätsmoduliert wird, um dem Beleuchtungsmuster (104) eine Musterstruktur auch in der zweiten (X) Richtung vorzugeben und/oder um die Intensität zum Rande jeder Periode hin anzuheben und somit eine U-förmige Intensitätsverteilung in der zweiten Richtung (X) vorzugeben.

13. Verfahren zur Beleuchtung eines Überwachungsbereichs (12),
wobei mindestens eine erste Beleuchtungseinheit (100a) und eine zweite Beleuchtungseinheit (100b) so zueinander angeordnet sind, dass sich ihre jeweils in einem Verfahren gemäß Anspruch 11 oder 12 erzeugten Beleuchtungsmuster (104) in dem Überwachungsbereich (12) überlagern, wobei insbesondere die erste Richtung der ersten Beleuchtungseinheit (100a) der zweiten Richtung der zweiten Beleuchtungseinheit (100b) und umgekehrt die zweite Richtung der ersten Beleuchtungseinheit (100a) der ersten Richtung der zweiten Beleuchtungseinheit (100b) entspricht und/oder wobei die Ablenkung in der ersten Beleuchtungseinheit (100a) synchron oder asynchron zu der Ablenkung in der zweiten Beleuchtungseinheit (100b) ist.

14. Dreidimensionales, insbesondere stereoskopisches Bilderfassungsverfahren zur Erzeugung einer dichten Tiefenkarte einer Szenerie in einem Überwachungsbereich (12), wobei der Überwachungsbereich (12) mit einem Verfahren nach einem der Ansprüche 11 bis 13 beleuchtet wird.

15. Verfahren zur sicheren dreidimensionalen Überwachung eines Raumbereichs (12), bei dem eine mit einem Bilderfassungsverfahren gemäß Anspruch 14 erzeugte dichte Tiefenkarte auf unzulässige Eingriffe ausgewertet und, wenn ein unzulässiger Eingriff erkannt wird, ein Abschaltsignal an eine Gefahrenquelle ausgegeben wird.

## Claims

1. A lighting unit (100) having a light source (106) and an optical element (110) arranged after the light source (106) to expand the light in at least one direction (Y) as well as having a deflection unit (112) which is arranged so that the expanded light is periodically deflectable in a second direction (X) transverse to the first direction (Y) in order thus to produce a lighting pattern (104) in a monitored zone (12) of a camera-based sensor (10),
**characterized in that**
the optical element (110) is designed to produce a lighting structure in at least the first direction (Y) so that a two-dimensional lighting pattern (104) can arise in the monitored zone (12).

2. A lighting unit (100) in accordance with claim 1,
wherein the optical element (110) is a diffractive optical element.

3. A lighting unit (100) in accordance with claim 1 or claim 2,
wherein the deflection unit (112) is a mirror wheel, a polygon mirror wheel or a rotating mirror; and wherein the mirror surfaces of the deflection nit (112) are designed as a hollow mirror with a preferably toric shape.

4. A lighting unit (100) in accordance with any one of the preceding claims,
wherein a modulation unit (22) for the light source (106) is provided so that structure can be preset for the lighting pattern (104) in the second direction (X) by intensity modulation.

5. A lighting unit (100) in accordance with claim 4,
wherein the modulation unit (22) is designed to raise the intensity toward the edge of each period and thus to preset a U-shaped intensity distribution in the second direction.

6. An arrangement (200) of at least one first lighting unit (100a) and one second lighting unit (100b) in accordance with any one of the claims 1 to 5, which are arranged with respect to one another so that the lighting patterns (104) are superimposed in the monitored zone (12), wherein in particular the first direction of the first lighting unit (100a) corresponds to the second direction of the second lighting unit (100b) and, conversely, the second direction of the first lighting unit (100a) corresponds to the first direction of the second lighting unit (100b).

7. An arrangement (200) in accordance with claim 6,
wherein a synchronization unit (22) is provided which can synchronize the movement of the deflection unit (112a) of the first lighting unit (100a) with the movement of the deflection unit (112b) of the second lighting unit (100b) synchronously for producing a stationary lighting pattern (104).

8. An arrangement in accordance with claim 6 or claim 7,
wherein the deflection unit (112a, 112b) of the first lighting unit (100a) and of the second lighting unit (100b) have a drive which can be set asynchronously to one another for producing a running lighting pattern (104).

9. A 3D camera (10) having at least one lighting unit (100) in accordance with any one of the claims 1 to 5 or having at least one arrangement (200) in accordance with any one of the claims 6 to 8, in particular a 3D stereo camera which has an evaluation unit (22) which is designed for the application of a stereo algorithm in which mutually associated part regions of the images taken by at least two cameras (14a, 14b, 16a, 16b) of the stereo camera (10) are recognized and their spacing is calculated with reference to the disparity.

10. A 3D camera (10) in accordance with claim 9 which is designed as a security camera,
wherein the evaluation unit (22) is furthermore designed to produce a dense depth map, to recognize unpermitted intrusions into the monitored zone (12) and thereupon to produce a deactivation signal, wherein a security output (26) is provided via which the safety camera (10) can output a deactivation signal to a monitored machine.

11. A method of lighting a monitored zone (12) of a camera-based sensor (10) having a lighting unit (100) which expends light of a light source (106) in at least one first direction (Y) and periodically deflects the expanded light in a second direction (X) transverse to the first direction (Y) in order thus to produce a lighting pattern (104) in the monitored zone (12),
**characterized in that**,
on the expansion of the light in particular by means of a diffractive optical element (110), a lighting structure is produced in at least the first direction (Y) so that the two-dimensional lighting pattern (104) arising in the monitored zone (12) has a pattern structure in at least the first direction (Y).

12. A method in accordance with claim 11,
wherein the light is intensity-modulated in dependence on the respective deflection in order also to preset a pattern structure for the lighting pattern (104) in the second (X) direction and/or to raise the intensity toward the edge of each period and thus to preset a U-shaped intensity distribution in the second direction (X).

13. A method of lighting a monitored zone (12),
wherein at least one first lighting unit (100a) and one second lighting unit (100b) are arranged with respect to one another so that their respective lighting patterns (104) produced in a method in accordance with claim 11 or claim 12 are superimposed in the monitored zone (12), wherein in particular the first direction of the first lighting unit (100a) corresponds to the second direction of the second lighting unit (100b) and, conversely, the second direction of the first lighting unit (100a) corresponds to the first direction of the second lighting unit (100b), and/or wherein the deflection in the first lighting unit (100a) is synchronous or asynchronous to the deflection in the second lighting unit (100b).

14. A three-dimensional, in particular stereoscopic image detection method for the generation of a dense depth map of a scene in a monitored zone (12), wherein the monitored zone (12) is illuminated using a method in accordance with any one of the claims 11 to 13.

15. A method for the safe three-dimensional monitoring of a spatial zone (12), wherein a dense depth map generated using an image detection method in accordance with claim 14 is evaluated for unpermitted intrusions and, if an unpermitted intrusion is recognized, a deactivation signal is output to a danger source.

## Revendications

1. Unité d'éclairage (100) comprenant une source de lumière (106) et un élément optique (110) disposé à la suite de la source de lumière (106), afin d'élargir la lumière dans au moins une direction (Y), ainsi qu'une unité de déflexion (112) qui est agencée de telle façon que la lumière élargie peut être défléchie périodiquement dans une seconde direction (X) transversale à la première direction (Y), pour générer ainsi un motif d'éclairage (104) dans une zone de surveillance (12) d'un détecteur (10) basé sur une caméra,
**caractérisée en ce que**
l'élément optique (110) est réalisé pour engendrer, au moins dans la première direction (Y), une structure d'éclairage de telle manière qu'un motif d'éclairage bidimensionnel (104) peut apparaître dans la zone de surveillance (12).

2. Unité d'éclairage (100) selon la revendication 1,
dans laquelle l'élément optique (110) est un élément optique à diffraction.

3. Unité d'éclairage (100) selon la revendication 1 ou 2,
dans laquelle l'unité de déflexion (112) comprend une roue à miroirs, une roue à miroirs polygonale ou un miroir rotatif, et dans laquelle en particulier des surfaces de miroir de l'unité de déflexion (112) sont réalisées sous forme de miroir creux avec une forme de préférence toroïdale.

4. Unité d'éclairage (100) selon l'une des revendications précédentes, dans laquelle il est prévu une unité de modulation (22) pour la source de lumière (106), de sorte que par modulation d'intensité une structure peut être imposée au motif d'éclairage (104) dans la seconde direction (X).

5. Unité d'éclairage (100) selon la revendication 4,
dans laquelle l'unité de modulation (22) est réalisée pour relever l'intensité vers la bordure de chaque période et pour imposer ainsi une répartition d'intensité en forme de U dans la seconde direction.

6. Agencement (200) d'au moins une première unité d'éclairage (100a) et d'une seconde unité d'éclairage (100b) selon l'une des revendications 1 à 5, lesquelles sont agencées l'une par rapport à l'autre de telle façon que les motifs d'éclairage (104) se superposent dans la zone de surveillance (12), et dans lequel en particulier la première direction de la première unité d'éclairage (100a) correspond à la seconde direction de la seconde unité d'éclairage (100b) et inversement la seconde direction de la première unité d'éclairage (100a) correspond à la première direction de la seconde unité d'éclairage (100b).

7. Agencement (200) selon la revendication 6,
dans lequel il est prévu une unité de synchronisation (22), laquelle est capable de synchroniser le déplacement de l'unité de déflexion (112a) de la première unité d'éclairage (100a) avec le déplacement de l'unité de déflexion (112b) de la seconde unité d'éclairage (100b) de manière synchrone pour engendrer un motif d'éclairage stable (104).

8. Agencement selon la revendication 6 ou 7,
dans lequel les unités de déflexion (112a, 112b) de la première unité d'éclairage (100a) et de la seconde unité d'éclairage (100b) comprennent un entraînement capable d'être réglé de manière asynchrone l'un par rapport à l'autre pour engendrer un motif d'éclairage (104) en déplacement.

9. Caméra 3D (10) comprenant au moins une unité d'éclairage (100) selon l'une des revendications 1 à 5, ou au moins un agencement (200) selon l'une des revendications 6 à 8, en particulier caméra stéréoscopique 3D, qui comprend une unité d'évaluation (22) qui est réalisée pour l'application d'un algorithme stéréoscopique, dans lequel des zones partielles mutuellement associées des images prises par au moins deux caméras (14a, 14b, 16a, 16b) de la caméra stéréo (10) sont reconnues et leur distance est calculée au moyen de la disparité.

10. Caméra 3D (10) selon la revendication 8, réalisée sous forme de caméra de sécurité, dans laquelle l'unité d'évaluation (22) est en outre réalisée pour générer une carte en profondeur dense, pour reconnaître des interventions inadmissibles dans la zone de surveillance (12) et pour générer ensuite un signal de coupure, et dans laquelle il est prévu une sortie de sécurité (26) via laquelle la caméra de sécurité (10) peut délivrer un signal de coupure à une machine surveillée.

11. Procédé pour l'éclairage d'une zone de surveillance (12) d'un détecteur (10) basé sur une caméra, comprenant une unité d'éclairage (100), qui élargit la lumière d'une source de lumière (106) dans au moins une première direction (Y), et qui défléchit périodiquement la lumière élargie dans une seconde direction (X) transversale à la première direction (Y), afin d'engendrer ainsi un motif d'éclairage (104) dans la zone de surveillance (12),
**caractérisé en ce que**
lors de l'élargissement de la lumière, en particulier au moyen d'un élément optique (110) à diffraction, on engendre une structure d'éclairage au moins dans la première direction (Y), de sorte que le motif d'éclairage bidimensionnel (104) qui apparaît dans la zone de surveillance (12) présente une structure de motif au moins dans la première direction (Y).

12. Procédé selon la revendication 11,
dans lequel la lumière est modulée en intensité indépendamment de la déflexion respective, afin d'imposer au motif d'éclairage (104) une structure de motif également dans la seconde direction (X) et/ou afin de relever l'intensité vers le bord de chaque période, et ainsi imposer une répartition d'intensité en forme de U dans la seconde direction (X).

13. Procédé pour l'éclairage d'une zone de surveillance (12),
dans lequel au moins une première unité d'éclairage (100a) et une seconde unité d'éclairage (100b) sont agencées l'une par rapport à l'autre de telle façon que leurs motifs d'éclairage (104), engendrés respectivement dans un procédé selon la revendication 11 ou 12, se superposent dans la zone de surveillance (12), de sorte qu'en particulier la première direction de la première unité d'éclairage (100a) correspond à la seconde direction de la seconde unité d'éclairage (100b) et inversement la seconde direction de la première unité d'éclairage (100a) correspond à la première direction de la seconde unité d'éclairage (100b), et/ou dans lequel la déflexion dans la première unité d'éclairage (100a) est synchrone ou asynchrone par rapport à la déflexion dans la seconde unité d'éclairage (100b).

14. Procédé de prise d'images tridimensionnelles, en particulier stéréoscopique pour engendrer une carte en profondeur dense d'une scène dans une zone de surveillance (12), dans lequel la zone de surveillance (12) est éclairée avec un procédé selon l'une des revendications 11 à 13.

15. Procédé pour la surveillance tridimensionnelle sûre d'une zone de l'espace (12), dans lequel une carte de profondeur dense, engendrée avec un procédé de détection d'image selon la revendication 14, est évaluée pour reconnaître des interventions inadmissibles et, quand une intervention inadmissible est reconnue, on délivre un signal de coupure à une source de danger.
